# EUROPEAN PATENT SPECIFICATION

(11) **EP 2 207 327 B1**
(45) Date of publication and mention of the grant of the patent: **24.08.2016**
(21) Application number: 10161276.0
(22) Date of filing: 22.11.2007
(51) Int. Cl.: H04L 29/06, H04N 7/173

(54) **Broadcast transmitting apparatus, method of transmitting broadcast data, broadcast receiver, and method of receiving broadcast data**
Rundfunkübertragungsvorrichtung, Verfahren zum Übertragen von Rundfunkdaten, Rundfunkempfänger und Verfahren zum Empfang von Rundfunkdaten
Appareil de transmission de diffusion, procédé de transmission de données de diffusion, récepteur de diffusion et procédé de réception de données de diffusion

(30) Priority: 24.11.2006 US 860810 P; 14.12.2006 KR 20060127976
(43) Date of publication of application: 14.07.2010
(62) Divisional of application: 07121373.0
(73) Proprietor: LG Electronics Inc., Seoul 150-721 (KR)
(72) Inventor: Hong, Ho Taek, S/137-724, Seoul (KR); Suh, Jong Yeul, S/137-724, Seoul (KR); Lee, Yoon Ei, S/137-724, Seoul (KR); Lee, Joon Hwi, S/137-724, Seoul (KR); Kim, Jin Pil, S/137-724, Seoul (KR)
(74) Representative: Cabinet Plasseraud

(56) References cited:
- US-A1- 2005 022 237
- US-A1- 2006 064 721
- US-A1- 2006 095 543
- US-A1- 2006 117 342

## Description

This application claims the benefit of US Provisional Application No. 60/860, 810, filed on November 24, 2006, and Korean Patent Application No. 10-2006-0127976, filed on December 14, 2006.

### BACKGROUND OF THE INVENTION

### Field of the Disclosure

The present disclosure relates to a broadcast transmitting apparatus, method of transmitting broadcast data, broadcast receiver, and method of receiving broadcast data.

### Discussion of the Related Art

Existing television (TV) services have been provided in such a manner that contents produced by broadcasting companies are transmitted through radio transmission media, such as terrestrial waves, cables or satellites, and a viewer watches the transmitted contents through a TV receiver capable of receiving the transmitted contents via the respective transmission media. However, as digital TV technologies based on digital broadcasting are developed and are commercially available, breaking from existing analog broadcasting, various contents, such as real-time broadcasts, Contents on Demand (CoD), games and news, can be provided to a viewer using the Internet connected to each home, besides the existing transmission media. An Internet Protocol TV (IPTV) may be taken as an example of the provision of contents using the Internet. The IPTV refers to a service that provides information services, video contents, broadcasts, etc. to a TV using high-speed Internet.

This IPTV is similar to general cable broadcasting or satellite broadcasting in that it provides broadcast contents including videos, but has a feature in that it additionally has bidirectionality. Also, differently from general terrestrial broadcasting, cable broadcasting or satellite broadcasting, the IPTV enables a viewer to watch a desired program at his/her convenient time. For various services of this IPTV, detailed information, a connection location, service provider information, a service channel, etc. about each content can be provided using a contents guide service.

However, in the case of the contents guide service, even though information of the contents guide service is updated, the user cannot know whether the contents guide service information has been updated and cannot know the updated information of the contents guide service information, unless he/she personally requests and confirms the updated contents guide service information. US 2006/0064721 A1, "Method and apparatus for implementing a synchronized electronic program guide application" (23 March, 2006) discloses requirements related to an electronic program guide (EPG). US 2005/0022237 A1, "Method and system for internet content acquisition according to a program guide" (27 January, 2005) discloses requirements related to a program guide describing meta-data of content. US 2006/0117342 A1, "Method for acquiring channel information and registering for reception of multicast based ip tv broadcasting in a access network" (1 January, 2006) discloses IP TV broadcasting service. US 2006/0095543 A1 "Information access system, information providing device, information access device, information providing method and information access method" (4 May, 2006) discloses requirements related to search a target content based on meta information provided by a broadcast station.

### SUMMARY OF THE INVENTION

Accordingly, the present disclosure is directed to a broadcast transmitting apparatus, method of transmitting broadcast data, broadcast receiver, and method of receiving broadcast data that substantially obviate one or more problems due to limitations and disadvantages of the related art.

An object of the present disclosure is to provide a data transmitting method, transmitting apparatus, broadcast receiver, and broadcast receiving method which can provide updated information of a contents guide.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, there is provided a method of processing Broadband Content Guide information in an Internet Protocol Television receiver as set out in claim 1.

In another aspect of the present disclosure, there is provided an Internet Protocol Television receiver as set out in claim 6.

In an arrangement related to the present disclosure, there is provided a method of receiving broadcast data using an IP network, comprises receiving a packet including updated information of a contents guide from a streaming server using a real-time streaming protocol, parsing the received packet using the real-time streaming protocol to extract the updated contents guide information from the received packet, and displaying the extracted updated contents guide information on a screen.

In an arrangement related to the present disclosure, a broadcast receiver using an IP network, comprises a network interface for receiving a packet including updated information of a contents guide from a streaming server, an IP manager for transmitting the received packet to a corresponding manager according to a protocol, a service control manager for parsing the packet including the updated contents guide information received from the IP manager using a real-time streaming protocol to extract the updated contents guide information from the received packet, and a controller for controlling a process of receiving the extracted updated contents guide information and displaying it on a screen.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a schematic view of a system according to one embodiment of the present disclosure which transmits updated contents guide information to a receiver;
FIG. 2A is a view showing contents guide data before being updated, according to one embodiment of the present disclosure, represented in an extensible Markup Language (XML) based on a TV anytime schema;
FIG. 2B is a view showing updated contents guide data according to one embodiment of the present disclosure, represented in the XML based on the TV anytime schema;
FIG. 3 is a view showing a BCG update table including updated contents guide information according to one embodiment of the present disclosure;
FIG. 4 is a view showing a BCG update table including updated contents guide information according to one embodiment of the present disclosure, represented in the XML;
FIG. 5 is a block diagram showing the configuration of a receiver according to one embodiment of the present disclosure which receives and processes updated contents guide information; and
FIG. 6 is a flowchart illustrating a process of processing updated contents guide information, according to one embodiment of the present disclosure.

### DESCRIPTION OF SPECIFIC EMBODIMENTS

Reference will now be made in detail to the embodiments of the present disclosure, examples of which are illustrated in the accompanying drawings. In the following description of the present disclosure, a detailed description of known functions and configurations incorporated herein will be omitted when it may make the subject matter of the disclosure rather unclear.

An Internet Protocol TV (IPTV) system, which is one example of a system providing contents using the Internet, can be roughly divided into a server, a network, and a receiver.

The server of the IPTV system includes servers taking charge of various functions, such as a Service Discovery & Selection (SD&S) server, a streaming server, a Broadband Contents Guide (BCG) server, a customer information server and a payment information server. The streaming server, among these servers, transmits video data encoded in Moving Picture Experts Group (MPEG) 2 or MPEG4 over the network using a Real-Time Transport Protocol (RTP), RTP Control Protocol (RTCP), etc. The streaming server can also control playback of a video stream to some degree through a function called Network Trick Play, including Pause, Replay, Stop, etc., using a Real-Time Streaming Protocol (RTSP), etc. The above protocols and encoding methods are examples and other protocols and encoding methods can be used according to the implementation. The BCG server, among the above servers, stores BCG data and provides the stored BCG data to the receiver. A BCG service provided by the BCG server is one example of a contents guide service providing information about contents, etc. The BCG data includes information about a stream connection using the RTSP/RTP, and a direct connection to the streaming server may be made using this connection information. The SD&S server provides the receiver with connection information, playback information, etc. about servers providing services such as broadcasting, Video On Demand (VOD), game and BCG.

The network of the IPTV system includes an Internet-based network, and gateways. The gateways perform multicast group management using an Internet Group Management Protocol (IGMP), etc., Quality of Service (QoS) management and so forth, as well as general data transfer. The receiver of the IPTV system refers to a receiver capable of receiving data transmitted over the Internet-based network and providing the received data to the user. The receiver may be, for example, an IPTV settop, homenet gateway, or IPTV-embedded TV.

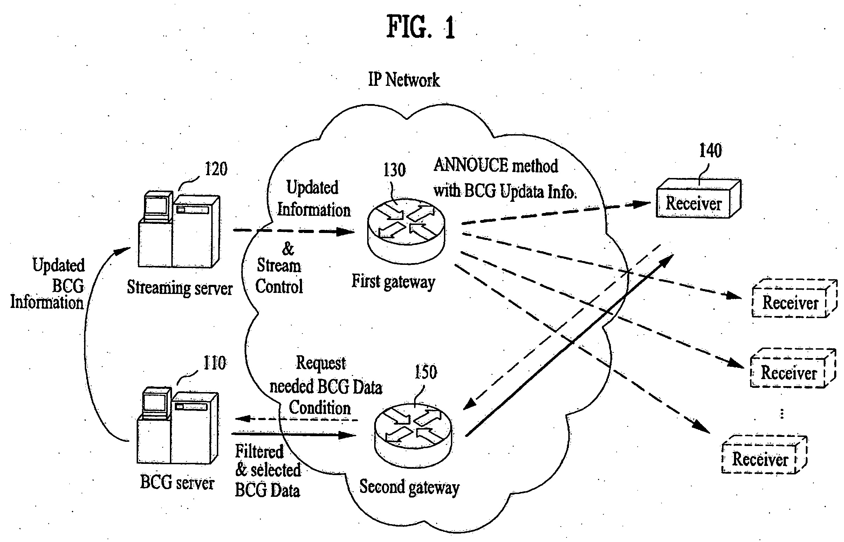

FIG. 1 is a schematic view of a system according to one embodiment of the present disclosure which transmits updated contents guide information to a receiver. This system includes a BCG server 110, streaming server 120, first gateway 130, receiver 140, and second gateway 150.

The BCG server 110 acts to store contents guide data and provide the stored contents guide data to the receiver 140 in response to the user's request, etc. When there is a change in information about contents, the BCG server 110 updates the stored contents guide data and transmits updated contents guide information about the updated contents guide data to the streaming server 120. The updated contents guide information comprises contents guide version information, information about updated contents, etc. However, the updated contents guide information may optionally comprise the information about the updated contents, etc., except the contents guide version information, among the above information.

The streaming server 120 transmits a desired content to the receiver 140 in the form of a stream using an RTP, etc. in response to a request from the user. The receiver 140 can control the stream using an RTSP, etc. in such a manner as to pause or play an image. Also, upon receiving updated contents guide information from the BCG server 110, the streaming server 120 can provide the updated contents guide information to the receiver 140 receiving a streaming service, using the RTP protocol or RTSP protocol. For example, the streaming server 120 may transmit the updated contents guide information to the receiver 140 under the condition of loading it in an Announce method of the RTSP. The Announce method is one of methods supported by the RTSP and is used for update of service-related information for the receiver. The use of the Announce method enables asynchronous data transfer to the receiver receiving the streaming service. For example, the Announce method is supported for RTSP data which is transmitted from a server to a receiver. That is, the server can load service information to be updated in the Announce method and transmit the resulting Announce method, and the receiver can receive the transmitted Announce method and obtain the updated service information therefrom.

The streaming server 120 transmits the updated contents guide information to the receiver 140 by loading it to the Announce method. The streaming server 120 may transmit the updated contents guide information under the condition of loading it in the Announce method together with other service-related information or under the condition of loading only the updated contents guide information in the Announce method. The updated contents guide information transmitted from the streaming server 120 is provided to the receiver 140 over a network. The streaming server 120 is connected with the first gateway 130, which supports the RTSP to control stream playback in response to a request from the receiver 140. The first gateway 130 can support the Announce method of the RTSP such that the updated contents guide information can be transferred to the receiver 140.

The receiver 140 analyzes the updated contents guide information received in the Announce method and recognizes whether contents guide data has been updated, version information, updated contents, etc. as a result of the analysis. The receiver 140 then displays whether the contents guide data has been updated, updated contents, etc. through a display unit based on the received updated contents guide information to provide them to the user. In the case when only the contents guide version information among the update information is included in the updated contents guide information, and the updated contents guide information is transmitted to the streaming server 120, the receiver 140 can recognize only whether the contents guide data has been updated, together with the contents guide version information. As a result, in this case, the receiver 140 can not provide the user with additional contents such as updated contents guide contents, except whether the contents guide data has been updated and the version information.

The user can confirm whether the contents guide data has been updated and request the updated contents guide data of the BCG server 110. In order to connect to the BCG server 110, the receiver 140 must be given connection information about the BCG server 110, such as an IP address of the BCG server 110. The connection information about the BCG server 110 can be acquired from an SD&S server (not shown). This SD&S server acts to provide connection information about various servers to the receiver.

The receiver 140 can connect to the BCG server 110 using the connection information about the BCG server 110 and request the stored contents guide data of the BCG server 110. The request of the contents guide data can be carried out in a unicast mode. The unicast mode is a mode where one sender transmits data to one recipient in a 1:1 manner. In the unicast mode, if a receiver requests data of a server, the server transmits the data to the receiver in response to the request. The receiver 140 can request the contents guide data stored in the BCG server 110 through the second gateway 150 connected with the BCG server 110. In the unicast mode, the receiver 140 can request updated contents guide data to the BCG server 110, and the BCG server 110 can transmit the requested contents guide data to the receiver 140. In the case where a query is supported, the receiver 140 can selectively request and receive only desired part of contents guide data. Accordingly, the receiver 140 can selectively request and receive only updated contents among the stored contents guide data.

At this time, for the data request, transmission, etc., a Simple Object Access Protocol (SOAP) or HyperText Transport Protocol (HTTP) can be used between the BCG server 110 and the receiver 140.

The BCG server 110, when there is a request for contents guide data from the receiver 140, provides the contents guide data to the receiver 140 requesting the data. In the case where only updated contents guide contents are selectively requested using a query mode, the BCG server 110 transmits only the selectively requested data among the contents guide data stored therein to the receiver 140.

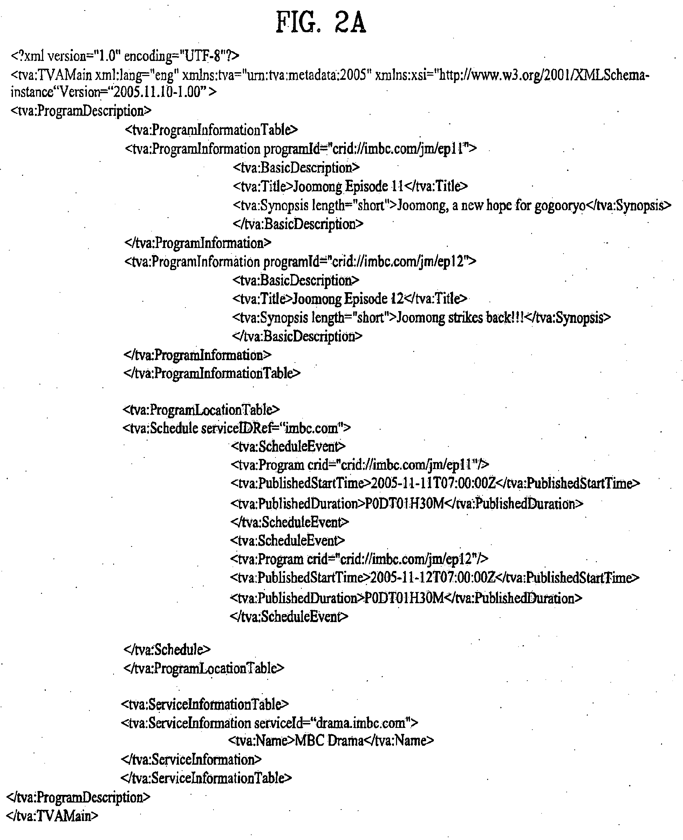

FIG. 2A shows contents guide data before being updated, according to one embodiment of the present disclosure, represented in an extensible Markup Language (XML) based on a TV anytime schema.

This contents guide data includes information about an episode 11 and episode 12 of a content `Joomong', etc. Content Reference IDs (CRIDs) of the respective episodes are indicated by 'crid://imbc.com/jm/ep11' and 'crid://imbc.com/jm/ep12', respectively. The information about each episode includes a synopsis, a broadcast start time, a broadcast length, channel information, etc. of the corresponding episode. Version information of the contents guide data is included in a "TVAMain' element. Although the version information can be additionally provided within meta data such as ProgramDescription, it is included in a main element, 'TVAMain', of TVA which is a start position of the contents guide data, in the present disclosure. In the 'TVAMain' element of FIG. 2A is included the version information of the contents guide data like 'Version="2005.11.07-1.00"'. Contents guide data, such as the synopsis, broadcast start time, broadcast length and channel information of each episode, is included in the ProgramDescription meta data.

A program CRID, program title, synopsis, etc. are included in ProgramInformationTable in the ProgramDescription meta data. As shown in FIG. 2A, in the ProgramInformationTable are included a program GRID, program title, synopsis, etc. of each of the episode 11 and episode 12 of the content "Joomong'. A service ID reference, a program CRID, a program start time, program time information, etc. are included in ProgramLocationTable in the ProgramDescription meta data. In FIG. 2A, in the ProgramLocationTable are included a service ID reference, a program GRID, a program start time, program time information, etc. of each of the episode 11 and episode 12 of the content `Joomong'. Particularly, in association with the program start time, the episode 11 is described as being started at 07:00:00 on November 11, 2005, and the episode 12 is described as being started at 07:00:00 on November 12, 2005. A service ID and a name thereof are included in ServiceInformationTable in the ProgramDescription meta data. In FIG. 2A, the ServiceInformationTable includes a service ID of a service provider providing the episode 11 and episode 12 of the content 'Joomong', a name 'MBC Drama', etc.

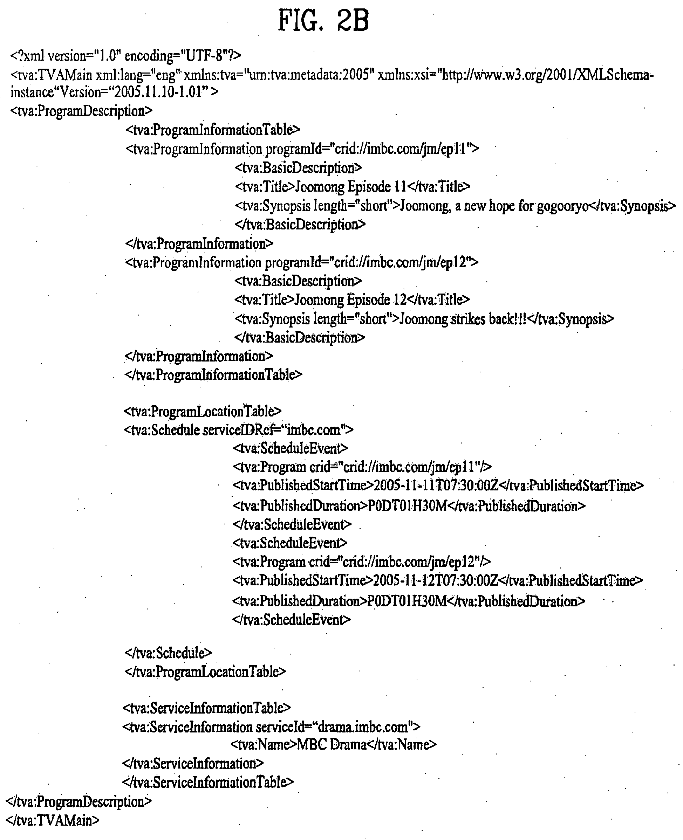

FIG. 2B shows updated contents guide data according to one embodiment of the present disclosure, represented in the XML based on the TV anytime schema. Assume that the program start time of each of the episode 11 and episode 12 of the content 'Joomong' was delayed 30 minutes.

Information about the program start time is included in ProgramLocationTable, as in FIG. 2A. As can be seen from data of a 'tva:PublishedStartTime' element in the ProgramLocationTable of FIG. 2B representing the program start times, the episode 11 was changed to be started at 07:30:00 on November 11, 2005, and the episode 12 was changed to be started at 07:30:00 on November 12, 2005. Also, because the contents guide data was updated due to the start time change of each episode, the contents guide version is changed. In FIG. 2B, the version information of the contents guide data was changed from '2005.11.07-1.00' to `2005.11.07-1.01'. If the contents guide data stored in the BCG server 110 is updated as in FIG. 2B, then the BCG server 110 transmits the updated information to the streaming server 120.

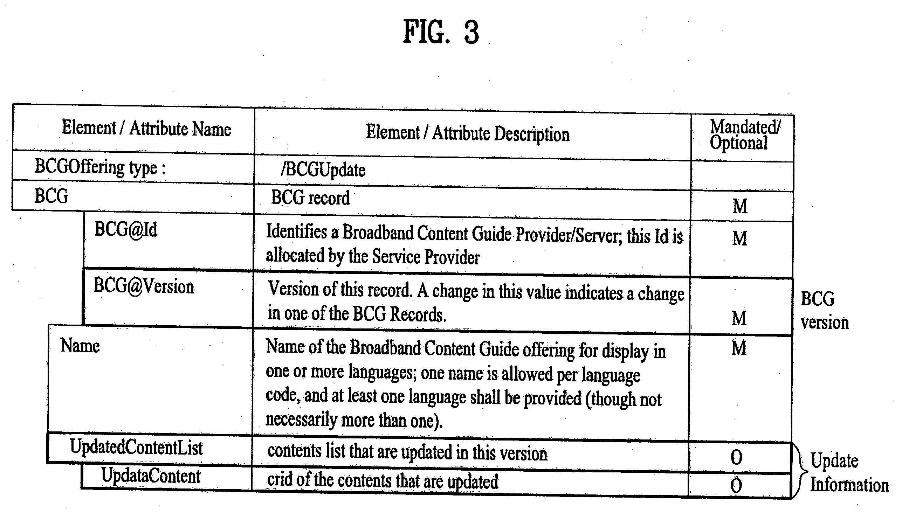

FIG. 3 shows a BCG update table including updated contents guide information according to one embodiment of the present disclosure. The BCG server 110 configures updated contents guide information in the form of the table of FIG. 3 and transmits the configured information to the streaming server 120. Whenever the contents guide version is updated, updated contents guide information having a structure as shown in FIG. 3 is transmitted from the BCG server 110 to the streaming server 120. For the transmission of the updated contents guide information, various protocols such as an HTTP and a File Transfer Protocol (FTP) can be used. Although other discovery tables may be used in connection with the transmission of the updated BCG information, the present disclosure proposes a BCG update table having the structure of FIG. 3. As described above, the BCG is one example of a contents guide. The name of the above table is one example, and the other names can be used according to the implementation.

The BCG update table of FIG. 3 comprises BCG version information, a list of updated contents, CRIDs of the updated contents, etc. BCGOffering type is a BCGUpdate table. That is, updated BCG information is provided using the above table. 'BCG' refers to transmission of BCG information. 'BCG@Id' includes an ID of a provider/server providing the BCG. This ID can be allocated by a service provider. 'BCG@Version' includes version information of the BCG. A change in this version information means that BCG data was updated. 'Name' records a name of the BCG. The BCG name can be provided in one or more languages. 'UpdatedContentList' includes information about a list of updated contents in a changed version. Updated Contents can be known from this list. `UpdatedContent' includes information about CRIDs of the updated contents. In the BCGUpdate table, the information of the `BCG', 'BCG@Id', 'BCG@Version' and 'Name' is mandatory, but the information of the 'UpdatedContentList' and 'UpdatedContent' is optional.

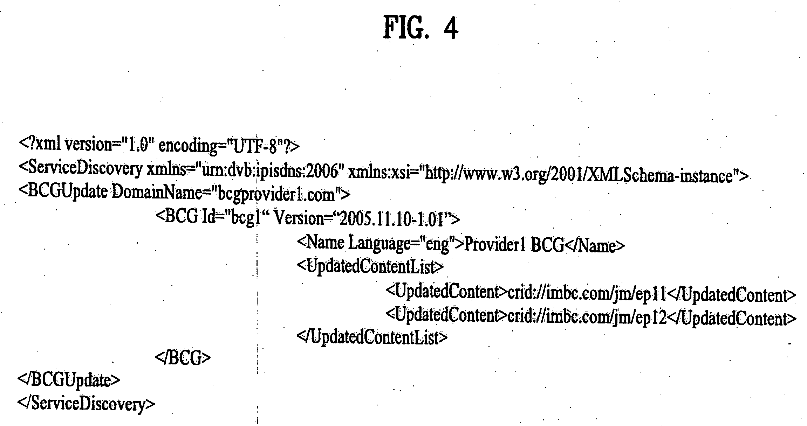

FIG. 4 shows a BCG update table including updated contents guide information according to one embodiment of the present disclosure, represented in the XML. The BCG update table of FIG. 4 includes the information where the contents guide is updated as shown in FIG. 2B, based on the table structure of FIG. 3.

Name information of a domain storing BCG data, BCG ID, BCG Version, etc. can be seen from FIG. 4. The `BCG Version' includes the version information '2005.11.07-1.01' of the BCG data changed as shown in FIG. 2B. A BCG name (Provider1 BCG) is included in 'Name'. Information about a list of updated contents and information about GRIDS of the updated contents are included in 'UpdatedContentList' and `UpdatedContent', respectively. Here, the information of the 'UpdatedContentList' and 'UpdatedContent' is optionally included in the BCG update table of FIG. 4. The program start time of each of the episode 11 and episode 12 of the content 'Joomong' in the BCG data of FIG. 2B was delayed. As a result, CRID information 'crid://imbc.com/jm/ep11' corresponding to the episode 11 of the content 'Joomong' and CRID information 'crid://imbc.com/jm/ep12' corresponding to the episode 12 are included in the 'UpdatedContentList' and 'UpdatedContent' of FIG. 4.

If the streaming server 120 receives the BCG update table as shown in FIG. 4, then it transmits the updated BCG information to the receiver 140 using the Announce method of the RTSP. At this time, the streaming server 120 may, using this method, transmit the whole of the BCG update table as shown in FIG. 4 or extract and transmit only part of the information included in this table. The receiver 140 analyzes the above table and provides the updated contents guide information to the user as a result of the analysis.

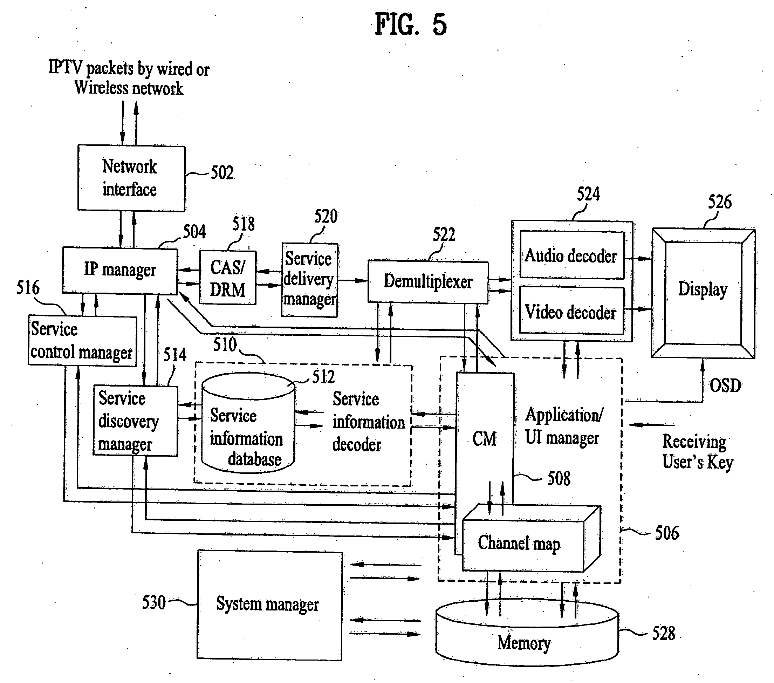

FIG. 5 is a block diagram showing the configuration of a receiver according to one embodiment of the present disclosure which receives and processes updated contents guide information. This receiver comprises a network interface 502, IP manager 504, application/UI manager 506, CM 508, service information decoder 510, service information database 512, service discovery manager 514, service control manager 516, CAS/DRM unit 518, service delivery manager 520, demultiplexer 522, audio/video decoder 524, display unit 526, memory 528, and system manager 530.

The network interface 502 can receive packets from a network and transmit packets from the receiver to the network. The IP manager 504 engages in packet delivery from sources to destinations with respect to a packet which is received by the receiver and a packet which is transmitted by the receiver. Also, the IP manager 504 classifies received packets such that the received packets correspond to appropriate protocols. The application/UI manager 506 provides a Graphic User Interface (GUI) for the user using an On Screen Display (OSD), etc., and receives a key input from the user and performs an operation of the receiver based on the key input. For example, if the application/UI manager 506 receives a key input for channel selection from the user, then it transmits the received key input to the CM 508. The Channel Manager (CM) 508 creates a channel map. Also, the CM 508 can select a channel based on the key input received from the application/UI manager 506, and control the service discovery manager 514. The CM 508 can receive service information of the selected channel from the service information decoder 510 and perform setting of an audio/video Packet Identifier (PID) of the selected channel in the demultiplexer 522, etc. based on the received service information.

The service information decoder 510 decodes service information such as Program Specific Information (PSI). That is, the service information decoder 510 can receive and decode a PSI section, Program and Service Information Protocol (PSIP) section, DVB-Service Information (SI) section, etc. demultiplexed by the demultiplexer 522. The service information decoder 510 decodes the received sections to create a database regarding the service information, and stores the database regarding the service information in the service information database 512. The service discovery manager 514 provides information required for selection of a service provider. If the service discovery manager 514 receives a signal for channel selection from the application/UI manager 506, then it searches for a corresponding service using the above service information. The service control manager 516 takes charge of selection and control of a service. For example, the service control manager 516 can perform the service selection and control by using an IGMP or RTSP when the user selects a real-time Live Broadcasting service as in an existing broadcasting system, and by using the RTSP when the user selects a service such as Video On Demand (VOD). The RTSP can provide a trick mode for real-time streaming.

A service-related packet received through the network interface 502 and IP manager 504 is transmitted to the CAS/DRM unit 518. The CAS/DRM unit 518 takes charge of Conditional Access System (CAS) and Digital Rights Management (DRM). The service delivery manager 520 takes charge of control of service data received. For example, the service delivery manager 520 can use a Real-Time Transport Protocol (RTP)/RTP Control Protocol (RTCP) for control of real-time streaming data. Because the real-time streaming data is transmitted using the RTP, etc., the service delivery manager 520 delivers the received data packet to the demultiplexer 522 by parsing it according to the RTP. Also, the service delivery manager 520 can feed information received from the network back to a service providing server using the RTCP. The above protocols are examples and other protocols can be used according to the implementation.

The demultiplexer 522 demultiplexes a received packet into audio data, video data, Program Specific Information (PSI) data, etc. and transmits the audio data, video data, PSI data, etc. to the video/audio decoder 524 and the service information decoder 510, respectively. The video/audio decoder 524 decodes the video data and audio data received from the demultiplexer 522. The video data decoded by the video/audio decoder 524 can be provided to the user through the display 526 and the audio data decoded thereby can be provided to the user through a speaker (not shown). The memory 528 stores system setup data, etc. This memory 528 may be, for example, a NonVolatile RAM (NVRAM) or flash memory. The system manager 530 controls the entire operation of the receiver system through power.

The streaming server 120 can transmit updated contents guide information to the receiver using the Announce method of the RTSP. An Announce method packet of the RTSP including the updated contents guide information can be received through the network interface 502 of the receiver. The Announce method packet received through the network interface 502 is transmitted to the IP manager 504.

The IP manager 504 determines whether the destination of the received packet is the receiver and then transmits the packet to an appropriate manager block according to a transmission/reception protocol. Because the received packet has been transmitted according to the RTSP, the IP manager 504 transmits the received packet to the service control manager 516. The service control manager 516. can control real-time streaming according to RTSP methods. The service control manager 516 can obtain the updated contents guide information from the Announce method packet received from the IP manager 504 by parsing the Announce method packet. Then, the service control manager 516 transmits the updated contents guide information to the application/UI manager 506. Upon receiving the updated contents guide information, the application/UI manager 506 can display the updated contents guide information through the display 526. The updated contents guide information can be displayed on the display 526 using an OSD, etc. A sound effect, etc. may be additionally provided along with the display.

If the user recognizes that contents guide data has been updated, then he/she can input a command requesting the updated contents guide data. If the request command is inputted, the application/UI manager 506 can connect to the BCG server 110 through the service discovery manager 514. The service discovery manager 714 manages connection information about servers providing various services, and others. The receiver can connect to the BCG server 110 via the IP manager 504 and network interface 502 based on the BCG server 110 connection information of the service discovery manager 514 and request the contents guide data of the BCG server 110.

The process of the receiver requesting data of the BCG server 110 and the process of the BCG server 110 transmitting the requested data to the receiver are the same as those previously described with reference to FIG. 1. In response to the request for the contents guide data, the BCG server 110 transmits the contents guide data to the receiver. In the case where the receiver selectively requests data using a query mode, the BCG server 110 transmits the selectively requested data to the receiver.

The receiver can receive a contents guide data packet transmitted from the BCG server 110 through the network interface 502. The received contents guide data packet can be transmitted to the service information database 512 via the IP manager 504 and the application/UI manager 506 and then stored and managed in the service information database 512 under control of the application/UI manager 506. Also, the application/UI manager 506 can display the contents guide data stored in the service information database 512 on the display 526 in the form of, for example, an Electronic Program Guide (EPG). The contents guide data is displayed on the display 526 using an OSD, etc. A sound effect, etc. may be additionally provided along with the display.

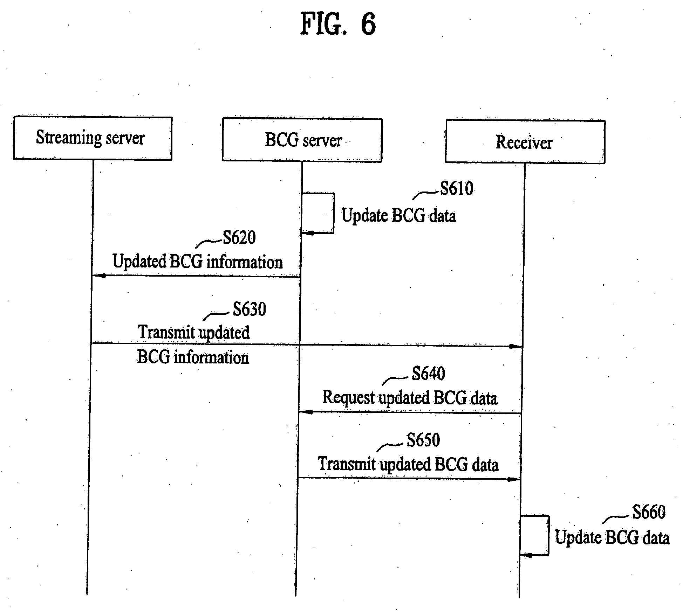

FIG. 6 is a flowchart illustrating a process of processing updated contents guide information, according to one embodiment of the present disclosure. This figure shows the flow and sequence of data among a streaming server, a BCG server and a receiver.

The BCG server stores contents guide data. If the contents guide data stored in the BCG server is updated (S610), the BCG server transmits updated contents guide information to the streaming server (S620). The updated contents guide information can comprise contents guide version information, updated, contents, etc. If the streaming server receives the updated contents guide information, then it transmits the updated contents guide information to the receiver (S630). At this time, the streaming server can transmit the updated contents guide information to the receiver using the Announce method of the RTSP. Upon receiving the updated contents guide information from the streaming server, the receiver can notify the user of whether the contents guide data stored in the BCG server has been updated, using the updated information.

The user can confirm whether the contents guide data has been updated and request the updated contents guide data of the BCG server. If the user inputs a contents guide data request command, the receiver connects to the BCG server storing the updated contents guide data and requests the updated data of the BCG server (S640). In response to the data request from the receiver, the BCG server transmits the requested contents guide data to the receiver (S650). The data request and transmission between the receiver and the BCG server can be carried out in the unicast mode as stated previously with reference to FIG. 1. In the case where the query mode is supported, the receiver selectively requests only an updated portion among the contents guide data and the BCG server transmits only the requested portion.

The receiver analyzes the contents guide data transmitted from the BCG server and updates contents guide data stored therein with the transmitted contents guide data as a result of the analysis (S660). The receiver can display a contents guide based on the contents guide data stored therein on the screen to provide it to the user.

As apparent from the above description, the data transmitting method, transmitting apparatus, broadcast receiver, and broadcast receiving method according to the present disclosure have effects as follows. According to the present disclosure, updated information of a contents guide can be received, so that updated contents guide data can be requested and received as needed, thus reducing burdens of a network and receiver. Further, the receiver can maintain the latest information about contents, so as to increase reliability of information.

It will be apparent to those skilled in the art that various modifications and variations can be made in the present disclosure without departing from the scope of the disclosures. Thus, it is intended that the present disclosure covers the modifications and variations of this disclosure provided they come within the scope of the appended claims and their equivalents.

## Claims

1. A method of processing, BCG, Broadband Content Guide, information in an IPTV, Internet Protocol Television, receiver (140), the method being **characterized in that** it comprises:
receiving a BCG discovery record including information identifying whether BCG information is changed and connection information of a BCG server (110) providing the BCG information to the IPTV receiver (140);
detecting the information identifying whether BCG information is changed;
requesting a changed portion among the BCG information to the BCG server (110) based on an unicast protocol and the connection information; and
receiving the changed portion among the BCG information from the BCG server (110) based on the unicast protocol, wherein the changed portion is transmitted by unit of a segment.

2. The method of claim 1, wherein the BCG information is used for a contents guide service providing information about contents in an IPTV system.

3. The method of claim 1, wherein the steps of requesting and receiving performs in an unicast mode.

4. The method of claim 1, wherein the steps of requesting and receiving performs in a query mode.

5. The method of claim 1, wherein the BCG discovery record comprises at least one of information about a version of the BCG information, information about a list of updated contents and information about CRIDs of the updated contents.

6. An IPTV, Internet Protocol TeleVision, receiver (140) for processing BCG, Broadband Content Guide, information, **characterized in that** it comprises:
a network interface (502) configured to receive a BCG discovery record including information identifying whether BCG information is changed and connection information of a BCG server (110) providing the BCG information to the IPTV receiver (140);
a service control manager (516) configured to detect the information identifying whether BCG information is changed; and
a controller (506) configured to control the network interface (502) to request a changed portion among the BCG information to the BCG server (110) based on an unicast protocol and the connection information, and to control the network interface (502) to received the changed portion among the BCG information from the BCG server (110) based on the unicast protocol, wherein the changed portion is transmitted by unit of a segment.

7. The IPTV receiver (140) of claim 6, wherein the BCG information is used for a contents guide service providing information about contents in an IPTV system.

8. The IPTV receiver (140) of claim 6, wherein the controller (506) performs in an unicast mode.

9. The IPTV receiver (140) of claim 6, wherein the controller (506) performs in a query mode.

10. The IPTV receiver (140) of claim 6, wherein the BCG discovery record comprises at least one of information about a version of the BCG information, information about a list of updated contents and information about CRIDs of the updated contents.

## Patentansprüche

1. Verfahren zur Verarbeitung von Broadband-Content-Guide-Informationen, BCG-Informationen, in einem Internet-Protocol-TeleVision-Empfänger (140), IPTV-Empfänger, wobei das Verfahren **dadurch gekennzeichnet ist, dass** es Folgendes umfasst:
Empfangen einer BCG-Ermittlungsaufzeichnung, die Informationen zum Identifizieren, ob sich BCG-Informationen geändert haben, und Verbindungsinformationen eines BCG-Servers (110), der die BCG-Informationen dem IPTV-Empfänger (140) bereitstellt, beinhaltet;
Erfassen der Informationen zum Identifizieren, ob sich BCG-Informationen geändert haben;
Anfordern eines geänderten Abschnitts aus den BCG-Informationen an den BCG-Server (110) auf Grundlage eines Unicast-Protokolls und der Verbindungsinformationen; und
Empfangen des geänderten Abschnitts aus den BCG-Informationen vom BCG-Server (110) auf Grundlage des Unicast-Protokolls, wobei der geänderte Abschnitt pro Segmenteinheit übertragen wird.

2. Verfahren nach Anspruch 1, wobei die BCG-Informationen für einen Contents-Guide-Service genutzt werden, der Informationen über Contents in einem IPTV-System bereitstellt.

3. Verfahren nach Anspruch 1, wobei die Schritte des Anforderns und Empfangens in einem Unicast-Modus ausführt werden.

4. Verfahren nach Anspruch 1, wobei die Schritte des Anforderns und Empfangens in einem Abfragemodus ausgeführt werden.

5. Verfahren nach Anspruch 1, wobei die BCG-Ermittlungsaufzeichnung zumindest Informationen über eine Version der BCG-Informationen, Informationen über eine Liste aktualisierter Contents und/oder Informationen über CRIDs der aktualisierten Contents beinhaltet.

6. Internet-Protocol-TeleVision-Empfänger (140), IPTV-Empfänger, zum Verarbeiten von Broadband-Content-Guide-Informationen, BCG-Informationen, **dadurch gekennzeichnet, dass** er Folgendes umfasst:
eine Netzwerkschnittstelle (502), die gestaltet ist, eine BCG-Ermittlungsaufzeichnung zu empfangen, die Informationen zum Identifizieren, ob sich BCG-Informationen geändert haben, und Verbindungsinformationen eines BCG-Servers (110), der die BCG-Informationen dem IPTV-Empfänger (140) bereitstellt, beinhaltet;
einen Service-Control-Manager (516), der gestaltet ist, die Informationen zum Identifizieren, ob sich BCG-Informationen geändert haben, zu erfassen; und
eine Steuereinheit (506), die gestaltet ist, die Netzwerkschnittstelle (502) zu steuern, um einen geänderten Abschnitt aus den BCG-Informationen an den BCG-Server (110) auf Grundlage eines Unicast-Protokolls und der Verbindungsinformationen anzufordern, und die Netzwerkschnittstelle (502) zu steuern, um den geänderten Abschnitt aus den BCG-Informationen vom BCG-Server (110) auf Grundlage des Unicast-Protokolls zu empfangen, wobei der geänderte Abschnitt pro Segmenteinheit übertragen wird.

7. IPTV-Empfänger (140) nach Anspruch 6, wobei die BCG-Informationen für einen Contents-Guide-Service genutzt werden, der Informationen über Contents in einem IPTV-System bereitstellt.

8. IPTV-Empfänger (140) nach Anspruch 6, wobei die Steuereinheit (506) in einem Unicast-Modus arbeitet.

9. IPTV-Empfänger (140) nach Anspruch 6, wobei die Steuereinheit (506) in einem Abfragemodus arbeitet.

10. IPTV-Empfänger (140) nach Anspruch 6, wobei die BCG-Ermittlungsaufzeichnung zumindest Informationen über eine Version der BCG-Information, Informationen über eine Liste aktualisierter Contents und/oder Informationen über CRIDs der aktualisierten Contents beinhaltet.

## Revendications

1. Procédé de traitement d'informations de BCG, Broadband Content Guide, dans un récepteur d'IPTV, Internet Protocol TeleVision, (140), le procédé étant **caractérisé en ce qu'**il comprend :
la réception d'un enregistrement de découverte de BCG incluant des informations identifiant si des informations de BCG sont changées ou non et des informations de connexion d'un serveur de BCG (110) fournissant les informations de BCG au récepteur d'IPTV (140) ;
la détection des informations identifiant si des informations de BCG sont changées ou non ;
la demande d'une portion changée, parmi les informations de BCG, au serveur de BCG (110) en fonction d'un protocole de monodiffusion et des informations de connexion ; et
la réception de la portion changée, parmi les informations de BCG, à partir du serveur de BCG (110) en fonction du protocole de monodiffusion, dans lequel la portion changée est transmise par unité d'un segment.

2. Procédé selon la revendication 1, dans lequel les informations de BCG sont utilisées pour un service de guide de contenus fournissant des informations concernant des contenus dans un système d'IPTV.

3. Procédé selon la revendication 1, dans lequel les étapes de la demande et de la réception se réalisent dans un mode de monodiffusion.

4. Procédé selon la revendication 1, dans lequel les étapes de la demande et de la réception se réalisent dans un mode de requête.

5. Procédé selon la revendication 1, dans lequel l'enregistrement de découverte de BCG comprend des informations concernant une version des informations de BCG, et/ou des informations concernant une liste de contenus actualisés et/ou des informations concernant des CRID des contenus actualisés.

6. Récepteur d'IPTV, Internet Protocol TeleVision, (140) pour traiter des informations de BCG, Broadband Content Guide, **caractérisé en ce qu'**il comprend :
une interface de réseau (502) configurée pour recevoir un enregistrement de découverte de BCG incluant des informations identifiant si des informations de BCG sont changées ou non et des informations de connexion d'un serveur de BCG (110) fournissant les informations de BCG au récepteur d'IPTV (140) ;
un gestionnaire de commande de service (516) configuré pour détecter les informations identifiant si des informations de BCG sont changées ou non ; et
un dispositif de commande (506) configuré pour commander l'interface de réseau (502) pour demander une portion changée, parmi les informations de BCG, au serveur de BCG (110) en fonction d'un protocole de monodiffusion et des informations de connexion, et pour commander l'interface de réseau (502) pour recevoir la portion changée, parmi les informations de BCG, à partir du serveur de BCG (110) en fonction du protocole de monodiffusion, dans lequel la portion changée est transmise par unité d'un segment.

7. Récepteur d'IPTV (140) selon la revendication 6, dans lequel les informations de BCG sont utilisées pour un service de guide de contenus fournissant des informations concernant des contenus dans un système d'IPTV.

8. Récepteur d'IPTV (140) selon la revendication 6, dans lequel le dispositif de commande (506) opère dans un mode de monodiffusion.

9. Récepteur d'IPTV (140) selon la revendication 6, dans lequel le dispositif de commande (506) opère dans un mode d'interrogation.

10. Récepteur d'IPTV (140) selon la revendication 6, dans lequel l'enregistrement de découverte de BCG comprend des informations concernant une version des informations de BCG, et/ou des informations concernant une liste de contenus actualisés et/ou des informations concernant des CRID des contenus actualisés.
